# EUROPEAN PATENT SPECIFICATION

(11) **EP 0 681 782 B1**
(45) Date of publication and mention of the grant of the patent: **02.02.2000**
(21) Application number: 95201174.0
(22) Date of filing: 08.05.1995
(51) Int. Cl.: A01F 15/10

(54) **Apparatus and method for forming a segmented round bale**
Verfahren und Vorrichtung um einen geschnittenen Rundballen zu formen
Appareil et méthode pour former une balle ronde segmentée

(30) Priority: 09.05.1994 US 241101; 09.05.1994 US 241102
(43) Date of publication of application: 15.11.1995
(73) Proprietor: NEW HOLLAND BELGIUM N.V., B-8210 Zedelgem (BE)
(72) Inventor: Webb, Bryant F., Ephrata, PA 17522 (US); van Groenigen, Jan C., B-8490 Varsenare (BE)
(74) Representative: Vandenbroucke, Alberic

(56) References cited:
- EP-A- 0 341 508
- DE-A- 3 719 845
- GB-A- 2 150 491
- US-A- 5 205 105

## Description

This invention relates generally to agricultural machines for making round bales, and more particularly to an apparatus and method for cutting crop in such machines in order to form a segmented round bale.

Agricultural machines towed by a tractor across a field for picking up windrowed crop material to form a cylindrical bale are commonly referred to as round balers. These machines have either a fixed or an expandable bale forming chamber disposed between opposing vertical sidewalls. The chamber is usually defined by a floor and transverse confining means comprising a continuous flexible apron and/or a plurality of transverse rolls. Frequently the apron includes an array of side-by-side belts trained around a series of rollers that extend between the sidewalls, and the floor consists of either a large roller or a continuous conveyor belt.

During field operation, crop material such as hay is picked up from the ground and fed into the chamber. The volume of crop material increases continuously in the chamber until a compact cylindrical package is formed. The package is wrapped while still in the chamber and then ejected onto the ground as a completed bale. Well known means for wrapping round bales include twine, net and plastic sheet material.

After the round bale has been ejected from the baler, it is then either left in the field for storage until it is needed, or it is transported to a remote site for storage or use. Eventually, the baled crop material is either fed out manually or via a mechanized system.

Under certain crop conditions, such as baled silage, the crop material in the bale adheres to itself due to intertwining of crop, effect of sticky juices and moisture, etc. all of which tend to hinder the feed out process, especially in manual systems. In one prior art attempt to overcome this problem, the bale is sliced into smaller segments as disclosed in US-A-4,549,481 and US-A-4,497,163. In the round baler apparatus of US-A-4,549,481, a knife is inserted into the periphery of a fully formed round bale to slice it into two cylindrically shaped parts prior to discharge from a baler. In the apparatus of US-A-4,497,163, which also contemplates slicing a formed bale into two parts while it is in the bale chamber, a knife is inserted through an aperture in the sidewall to make a lateral cut.

In these balers the cutting actions have to be delayed until the bale is fully formed, such that the interruption of the baling operations caused by the wrapping of the crop material with twine, net or the like, is still further lengthened by the time interval needed for insertion and retraction of the knife.

In another prior art device, disclosed in US-A-5,205,105, an expandable chamber round baler is shown with cutting knives that extend from the floor roll to cut crop material conveyed into the forming chamber by a crop pickup mechanism adjacent the floor roll. In the non-cutting position the knife elements in the baler of US-A-5,205,105 baler are retracted into a position within the outer shell of the floor roll. The knives engage the incoming crop material, which tends to travel over instead of inbetween the cutting edges, such that only part of material fibres is cut and hence the adjacent slices of the completed bale may still hold firmly together.

To enhance feed out of baled crop material the present invention provides a solution to problems encountered but not solved by prior art devices. A baler improvement is provided that successfully embraces the problems without sacrificing reliability and effectiveness of the basic baling unit.

Therefore it is an object of the present invention to provide improved apparatus and method for cutting crop in a round baler in order to enhance the feed out capability of the bale being formed, without affecting the reliability and overall performance of the baler.

According to one aspect of the present invention, a round baler is provided, comprising
a main frame;
a pair of spaced side walls mounted on said main frame;
crop confining means, mounted between said side walls and defining an expandable chamber for rotatably forming a cylindrical package of crop material between said side walls,
said crop confining means comprising at least one movable confining means constituted by an apron and/or a plurality of transverse rollers;
conveyor means mounted on said frame for grasping crop material and conveying it into said chamber;
means for defining a generally transverse crop infeed opening operatively associated with said conveyor means to receive crop material conveyed into said chamber; and
crop severing means extending into said expandable chamber inbetween or through said crop confining means to cut crop material on the surface of said cylindrical package as it is being formed.

Said baler is characterized in that said crop severing means extend into said expandable chamber at a location behind said at least one movable confining means and before said infeed opening, as seen in the direction of rotation of the cylindrical package.

Preferably the severing means comprise a plurality of transversely spaced knife elements installed between coaxial segments of transverse roll in the vicinity of the upper limit of said infeed opening. Control means may be provided for incrementally retracting said severing means from said chamber during baling operations.

According to another aspect of the present invention a method is provided of forming in a round baler a segmented cylindrical bale of crop material having a generally round cross section, said method comprising the steps of:
- picking up crop material;
- feeding said picked up crop material through a crop infeed opening into a bale forming chamber, which has an outer periphery defined by crop confining means which comprise at least one movable confining means constituted by an apron and/or a plurality of transverse rollers;
- forming said crop material into a mat as it enters said bale forming chamber;
- guiding said mat of crop material initially along said outer periphery;
- guiding said mat subsequently along a spiral path to form a cylindrical package having a general round cross section, and
- severing said mat of crop material as it is being guided along said outer periphery of said bale forming chamber.

Said method is characterized in that said severing step is executed after said mat of crop material has been guided along said at least one movable confining means and before it reaches said crop infeed opening.

A baler in accordance with the present invention will now be described in greater detail, with reference to the accompanying drawings, in which:
Figure 1 is a diagrammatic side elevational view of a round baler in which the present invention is incorporated;
Figure 2 is a diagrammatic side elevational view, similar to Figure 1, of a round baler with its forming chamber in the full bale position;
Figure 3 is a view taken in the direction of arrows 3-3 in Figure 1;
Figure 4 is a view taken in the direction of arrows 4-4 in Figure 3; and
Figure 5 is a view similar to Figure 4 with selected elements in their operative position.

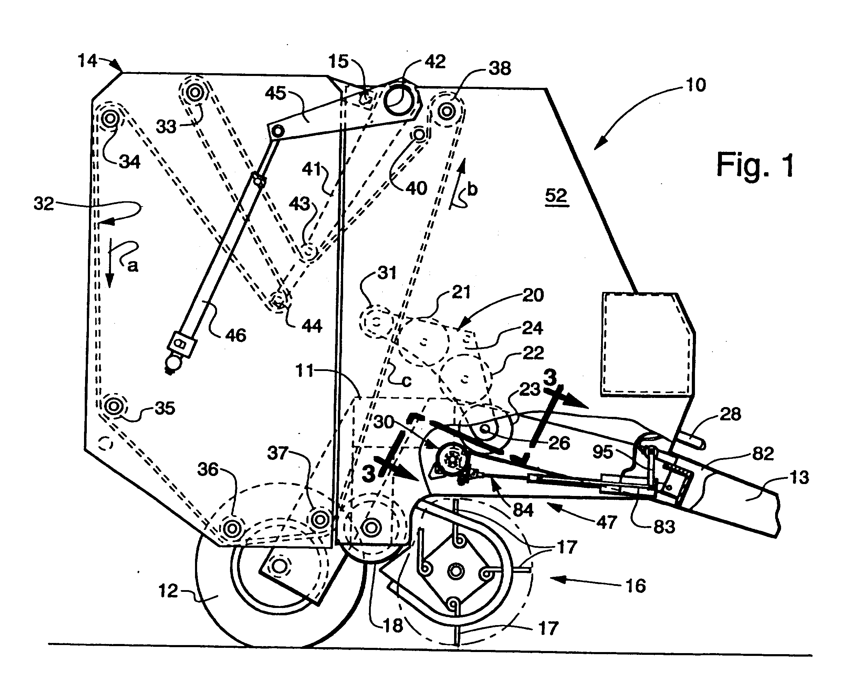

Referring now to the drawings for a more detailed description of the preferred embodiment of the invention, Figure 1 shows a round baler 10 of the type having an expandable chamber defined by belts and rollers, as generally disclosed in US-A-4,870,812.

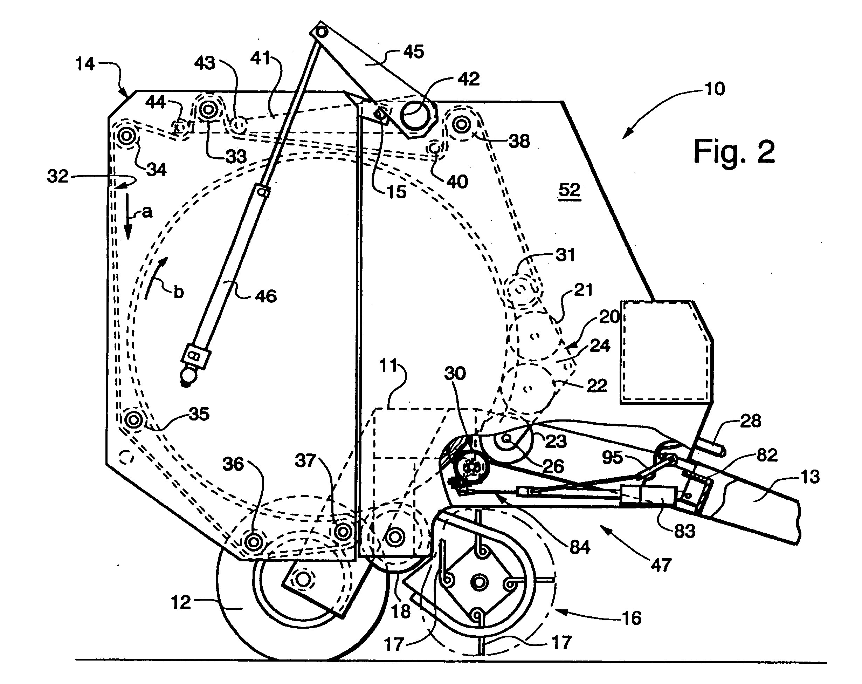

Round baler 10, which incorporates the preferred embodiment of the present invention, includes a main frame 11 supported by a pair of wheels 12 (only one shown). A tongue 13 is provided on the forward portion of main frame 11 for connection to a tractor. Pivotally connected to the sides of main frame 11 by a pair of stub shafts 15 is tailgate 14 which may be closed (as shown in Figures 1 and 2) during bale formation or pivoted open about stub shafts 15 to discharge a completed bale. A conventional pick-up 16, mounted on main frame 11, includes a plurality of fingers or tines 17 movable in a predetermined path to lift crop material from the ground and deliver it rearwardly toward a floor roll 18, rotatably mounted on main frame 11.

A chamber for forming bales is defined partly by a sledge assembly 20 comprising a plurality of rollers 21, 22, 23 extending transversely of the main frame 11 in the arcuate arrangement seen in Figure 1 and 2. Rollers 21, 22, 23 are journalled at their ends in a pair of spaced apart arms 24, one of which is shown. These arms are pivotally mounted inside main frame 11 on stub shafts 26 for providing movement of sledge assembly 20 between the bale starting position shown in Figure 1 and the full bale position shown in Figure 2. Rollers 21, 22, 23 are driven in a counter-clockwise direction by conventional means (for example, chains and sprockets) connected with a drive shaft 28 which in turn is connected to the power-take-off of a tractor. A starter roll 30, located adjacent roller 23, is also driven counter-clockwise, as discussed below. A freely rotatable idler roller 31, carried by arms 24, moves in an arcuate path with sledge assembly 20.

The bale forming chamber is further defined by an apron 32 comprising a plurality of continuous side-by-side belts supported by guide rolls 33, 34, 35, 36, 37 rotatably mounted in tailgate 14. Apron 32 is also supported on a drive roll 38, mounted on main frame 11. Although apron 32 passes between roller 21 on sledge assembly 20 and idler roller 31, it is in engagement only with idler roller 31 and not roller 21 which is located in close proximity to the apron belts and serves to strip crop material from the belts, in addition to its bale forming function. Suitable coupling means (not shown) connected to drive shaft 28 provide rotation of drive roll 38 in a direction causing movement of apron 32 along the varying paths indicated generally by arrows a and b in Figures 1 and 2. An additional guide roll 40 in the main frame 11 ensures proper driving engagement between apron 32 and drive roll 38. A pair of take up arms 41 (only one shown) are pivotally mounted on main frame 11 by a cross shaft 42 for movement between inner and outer positions shown in Figures 1 and 2, respectively. Belt tension lever arms 45 (one shown) are also mounted to pivot with take up arms 41, which carry additional guide rolls 43, 44 for supporting apron 32. An hydraulic cylinder 46 is mounted on tail gate 14 and normally urges lever arms 45 and take up arms 41 toward their inner positions (Figure 1), as the bale diameter increases.

When the elements of round baler 10 are disposed as shown in Figure 1 with tailgate 14 closed, an inner course c of apron 32 extends between guide roll 37 and idler roll 31. Rollers 21, 22, 23 are inclined rearwardly on sledge assembly 20 to define with course c the bale core starting chamber. Apron inner course c forms the rear wall of the chamber while the inwardly facing peripheral surfaces of rollers 21, 22, 23 define in a general manner a rearwardly inclined cooperating front wall. Floor roll 18 defines the bottom of the chamber and starter roller 30, spaced from floor roll 18, provides the upper boundary of an inlet for crop material.

As round baler 10 is towed across a field, pick-up tines 17 lift crop material from the ground and deliver it through the inlet. The crop material is carried rearwardly by floor roll 18 into engagement with apron inner course c (Figure 1) which urges it upwardly and slightly forwardly into engagement with rollers 21, 22, 23. In this manner crop material is coiled in a clockwise direction to start a bale core. Continued feeding of crop material into the bale forming chamber by pick-up tines 17 causes the apron inner course c to expand in length around a portion of the circumference of the bale core as the crop material travels in a general mat configuration along a continuously spiralling path causing the diameter to increase. Take up arms 41 rotate conjointly with lever arms 45 from their inner positions shown in Figure 1 toward their outer positions shown in Figure 2 to provide for expansion of the inner course of the apron in a well known manner, i.e., in effect the outer course of the belts of apron 32 is diminished in length while the inner course increases a like amount. After a bale has been formed and wrapped, tailgate 14 is opened and the bale is ejected rearwardly. Subsequent closing of tailgate 14 returns the apron inner and outer courses of the belts of apron 32 to the locations shown in Figure 1.

During bale formation, sledge assembly 20 also moves between a bale starting position (Figure 1) to a full bale position (Figure 2). This movement of sledge assembly 20 causes idler roller 31 to move in an arcuate path while maintaining apron 32 in close proximity to roller 21, thereby allowing roller 21 to strip crop material from the belts of apron 32 and prevent or reduce significantly the loss of crop material between roller 21 and apron 32 during formation of a bale. Sledge assembly 20 is pushed outwardly towards its full bale position during bale formation as the crop material expands against rollers 21, 22, 23 and then subsequently is pulled inwardly by apron 32 to the position shown in Figure 1 during bale ejection.

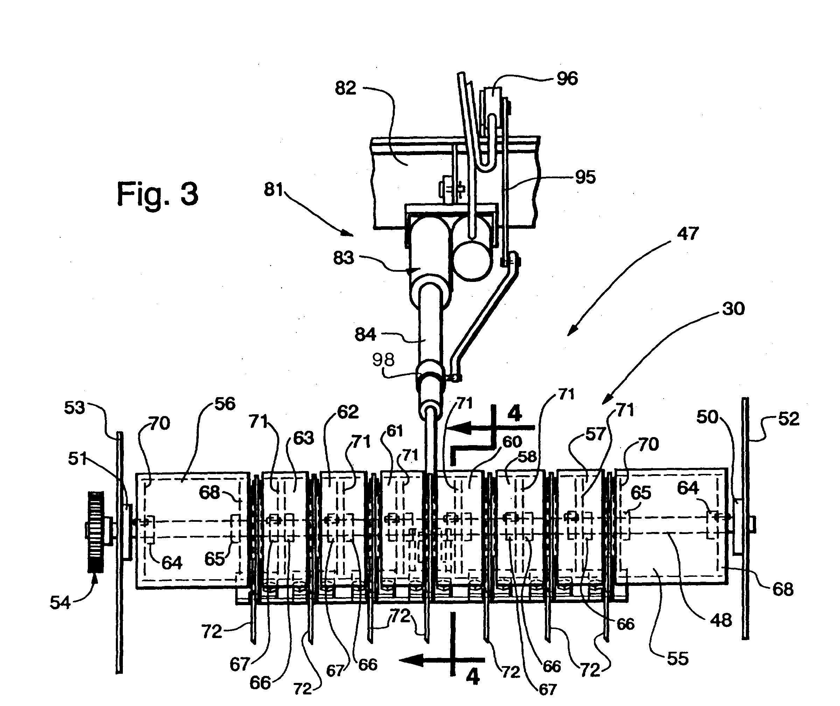

Now turning to the crop cutting apparatus of the present invention, generally designated by reference numeral 47 in Figures 1 and 2, starter roll 30 shown in Figure 3 is mounted on shaft 48, journalled for rotation in bearing assemblies 50, 51 mounted on side walls 52, 53. Gear 54 is driven in a conventional manner with rollers 21, 22, and 23 by a chain and sprocket arrangement coupled to drive shaft 28.

Starter roll 30 comprises two similar outer cylindrical segments 55, 56 and six similar inner cylindrical segments 57, 58, 60, 61, 62, 63, all of which are affixed to shaft 48 by a pair of keyed collar elements 64, 65, and 66, 67, for outer and inner segments, respectively. The outer segments 55, 56 of starter roll 30 include end walls 68, 70 to which collars 64 are affixed. Each of the inner segments include an inner wall 71 to which a pair of collars 66, 67 are affixed.

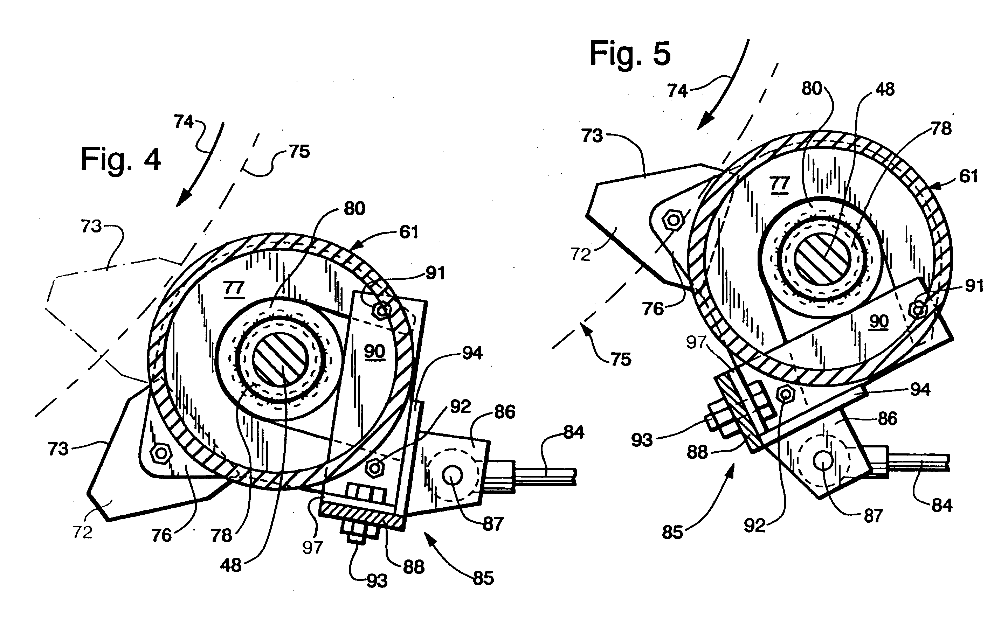

A plurality of knives 72, extending outwardly from roll 30, are mounted in the annular space between adjacent segments. Each knife 72 is generally triangularly shaped (see Figures 4 and 5) and includes at least one edge 73 sharpened for cutting the crop material passing in the direction designated by arrow 74. The outer periphery of the cylindrical package of crop material being rotated in the bale forming chamber is generally designated by reference numeral 75. Each knife 72 is mounted via a tab 76 to a C shaped bracket 77 which encompasses shaft 48. A bearing assembly comprising an inner race 78 encircling shaft 48 and an outer race 80 affixed to C shaped bracket 77 enables knife 72 to be rotated about shaft 48 between the positions shown in Figures 4 and 5.

An actuator 81 mounted on a cross member 82 of frame 11 consists of a main body portion 83 and reciprocally driven element 84, which is pivotally attached to knife mounting assembly 85 via flange 86 and pin 87. Knife mounting assembly 85 includes a transverse base member 88 from which a plurality of upright struts 90 extend for securing C shaped brackets 77 in place (via bolts 91, 92) on and for rotation about shaft 48. Upright struts 90 include flange portions 97 which are secured to base member 88 via bolts 93. Completing mounting assembly 85 is rectangular plate 94 integral with flange 86 and extending upwardly from and also integral with transverse base member 88. It should be noted that the entire mounting assembly could be conveniently fabricated as a unitary weld assembly to yield the same result.

The position of driven actuator element 84 determines the angular position of pivoting leg 95 relative to electrical sensing means 96. Thus, as the position of bracket 98 moves with element 84 relative to main body portion 83, leg 95 rotates about the axis of sensing means 96, which angular position is ascertainable by conventional electrical sensing means. The retracted and extended knife positions correspond to the two positions of leg 95 shown in Figures 1 and 2.

In operation, as baler 10 is pulled across a field, pick-up 16 picks up a windrow of crop material formed on the field and transforms it into a transverse mat of crop material that is fed through the inlet of a bale forming chamber in a conventional manner. As the mat of material is guided initially along the outer periphery of the bale forming chamber and subsequently in a spiral fashion to form the cylindrical package of crop material, the crop forming elements expand to accommodate the constantly increasing diameter of the cylindrical package of crop that will eventually be wrapped and discharged onto the field as a completed round bale.

With resect to the severing function, the knives of crop cutting mechanism 47 are initially in the position shown in Figure 4. Depending on the operator's desire based on the condition and type of crop being baled, knives 72 are incrementally rotated to any position between the positions shown in Figures 4 and 5 during the time the bale is being formed. When the knives are extended into the chamber to the position shown in Figure 5, the mat of material on the outside of the spiralling mat is engaged and cut after it has completed its travel along the expanding chamber and prior to being formed into the interior the package as it is being formed. The crop is severed in approximately the same transverse location to facilitate bale feed out, i.e., as long as the knives are in operative position a radial slice is being defined in the crop material.

In the event the conditions are such that the operator desires to reduce the severing action he has several options, one of which was mentioned above relative to the incremental positioning of the knives. He can also reduce the numbers of knives by removing knives and forming a new pattern, e.g., remove alternate knives, or he has the option of retracting the knives during a selected portion of the bale forming cycle during operation, all of which options vary the slices being formed and accordingly the segmented nature of the final bale.

Of the many implicit and explicit advantages of the present invention is its ability to modify existing round baler elements to provide structure for carrying out the present invention and yet not affect the general overall function of the baler. Further, there is inherently less debris in the starter roll area which improves reliability and durability, but additionally, any debris that does occur during cutting drops to the mat of material that is being guided into the bale chamber below the severing mechanism. Still further, to cut the hay in a location where the mat is more distinctly defined enhances significantly the desired result of a clearly defined slice.

While preferred structure in which the principles of the present invention are carried out is shown and described above, it is to be understood that the invention is not limited to such structure, but that, in fact, widely different means of varying scope and configuration may be employed in the practice of the invention. E.g. the juxtaposed belts of apron 32 may be replaced with a chains and slats conveyor or any other suitable conveyor means. One may also consider to equip idler roller 31 or another roller of the sledge assembly 20 with a similar set of knives.

## Claims

1. A round baler (10) comprising:
a main frame (11);
a pair of spaced side walls (52, 53) mounted on said main frame (11);
crop confining means (18, 32, 20, 30), mounted between said side walls (52, 53) and defining an expandable chamber for rotatably forming a cylindrical package of crop material between said side walls (52, 53),
said crop confining means comprising at least one movable confining means constituted by an apron (32) and/or a plurality of transverse rollers (20);
conveyor means (16) mounted on said frame (11) for grasping crop material and conveying it into said chamber;
means (30, 18) for defining a generally transverse crop infeed opening operatively associated with said conveyor means (16) to receive crop material conveyed into said chamber; and
crop severing means (47) extending into said expandable chamber inbetween or through said crop confining means (18, 32, 20, 30) to cut crop material on the surface of said cylindrical package as it is being formed;
characterized in that:
said crop severing means (47) extend into said expandable chamber at a location behind said at least one movable confining means (32) and before said infeed opening, as seen in the direction of rotation of the cylindrical package.

2. A round baler according to Claim 1, characterized in that said crop severing means (47) comprise a plurality of transversely spaced knife elements (72) extending radially into said chamber.

3. A round baler according to Claim 2, characterized in that it further comprises control means (84-87) for incrementally retracting said extending knife elements (72) from said chamber under conditions where crop material is being conveyed into said expandable chamber by said conveyor means (16) to form a cylindrical package of crop material.

4. A round baler according to any of the preceding claims, characterized in that said crop severing means (47) extend into said expandable chamber in the vicinity of the upper limit (30) of said infeed opening.

5. A round baler according to any of the preceding claims, characterized in that said crop confining means further comprise at least one transverse roll (30),
extending between the side walls (52, 53) behind said at least one movable confining means (32) as seen in said direction of rotation of the cylindrical package and
comprising a driven shaft (48) and a plurality of coaxial segments (55-63) mounted in side by side fashion along said shaft (48) for rotation therewith.

6. A round baler according to Claim 5, characterized in that said severing means (47) comprise knife mounting means (85) for mounting said spaced knife elements (72) between said segments (55-63) on said shaft (48) to pivot around said shaft (48) independently of said rotating segments (55-63).

7. A round baler according to Claim 6, when appended to Claim 4, characterized in that said at least one transverse roll is a starter roll (30) providing the upper limit of said infeed opening.

8. A round baler according to any of the preceding claims, characterized in that:
said crop confining means includes means (18, 32, 20) for conveying the crop material fed through said infeed opening into said expandable chamber in a continuously spiralling path and incorporating said crop material into said expanding cylindrical package of crop material; and
said severing means (47) cut said crop subsequent to its incorporation into said cylindrical package.

9. A round baler according to Claim 8, characterized in that said means (30, 18) for defining said infeed opening comprise a floor conveyor (18) extending between said side walls (52, 53) to receive crop material conveyed into said chamber by said conveyor means (16),
said floor conveyor (18) providing the lower limit of said infeed opening and being driven to initially urge said crop material along its spiral path.

10. A round baler according to Claim 9, characterized in that said severing means (47) cut the crop material at the periphery of said cylindrical package and the cut crop material is spirally urged into engagement with crop material being introduced to said chamber subsequent to crop being engaged by said severing means (47).

11. A round baler according to any of the preceding claims, characterized in that said conveyor means (16) comprise a pick-up means (16) for picking up crop material from a field and conveying it to said infeed opening.

12. A method of forming in a round baler (10) a segmented cylindrical bale of crop material having a generally round cross section, said method comprising the steps of:
- picking up crop material;
- feeding said picked up crop material through a crop infeed opening into a bale forming chamber, which has an outer periphery defined by crop confining means (18, 32, 20, 30) which comprise at least one movable confining means constituted by an apron (32) and/or a plurality of transverse rollers (20);
- forming said crop material into a mat as it enters said bale forming chamber;
- guiding said mat of crop material initially along said outer periphery;
- guiding said mat subsequently along a spiral path to form a cylindrical package having a general round cross section; and
- severing said mat of crop material as it is being guided along said outer periphery of said bale forming chamber;
said method being characterized in that said severing step is executed after said mat of crop material has been guided along said at least one movable confining means (32/20) and before it reaches said crop infeed opening.

13. A method according to Claim 12, characterized in that said forming step further comprises:
- conveying said picked up material in a generally horizontal direction as it is being formed into a mat and prior to being guided along said outer periphery of said bale forming chamber.

14. A method according to Claim 13, characterized in that said severing step takes place under conditions where said mat of crop material is being guided along said spiral path in the general direction of subsequently picked up material being conveyed in said generally horizontal direction.

15. A method according to any of the Claims 12 to 14, characterized in that said severing takes place at a plurality of horizontally spaced locations.

16. A method according to Claim 15, characterized in that said severing takes place in vertical planes to continuously segment said mat in a manner that provides vertical slices in said cylindrical package.

17. A method according to any of the Claims 12 to 16, characterized by the further steps of:
- sensing the diameter of said cylindrical package;
- halting said severing step when said diameter reaches a predetermined value; and
- introducing wrapping material into said baling chamber to wrap it around said cylindrical package to form a completed bale.

18. A method according to any of the Claims 12 to 17, characterized in that said severing step comprises intermittently severing said mat of crop material.

## Patentansprüche

1. Rundballenpresse (10) mit:
einem Hauptrahmen (11),
zwei mit Abstand voneinander angeordneten Seitenwänden (52, 53), die auf dem Hauptrahmen (11) befestigt sind,
Erntematerial-Umgrenzungseinrichtungen (18, 32, 20, 30), die zwischen den Seitenwänden (52, 53) befestig sind und eine ausdehnbare Kammer zur drehenden Formung eines zylindrischen Packens aus Erntematerial zwischen den Seitenwänden (52, 53) bilden,
wobei die Erntematerial-Umgrenzungseinrichtungen zumindest eine bewegliche Umgrenzungseinrichtung umfassen, die durch eine Umschlingungseinrichtung (32) und/oder eine Vielzahl von sich in Querrichtung erstreckenden Walzen (20) gebildet ist,
Fördereinrichtungen (16), die auf dem Rahmen (11) befestigt sind, um Erntematerial zu erfassen und es in die Kammer zu fördern,
Einrichtungen (30, 18) zur Bildung einer sich allgemein in Querrichtung erstreckenden Erntematerial-Zuführungsöffnung, die betriebsmäßig den Fördereinrichtungen (16) zugeordnet ist, um in die Kammer gefördertes Erntematerial aufzunehmen, und
Erntematerial-Schneideinrichtungen (47), die sich in die ausdehnbare Kammer zwischen oder durch die Erntematerial-Umgrenzungseinrichtungen (18, 32, 20, 30) erstrecken, um Erntematerial auf der Oberfläche des zylindrischen Packens zu schneiden, während dieser geformt wird,
dadurch gekennzeichnet,
daß sich die Erntematerial-Schneideinrichtungen (47) in die ausdehnbare Kammer an einer Stelle hinter der zumindest einen beweglichen Umgrenzungseinrichtung (32) und vor der Zuführungsöffnung bei Betrachtung in Drehrichtung des zylindrischen Packens erstrecken.

2. Rundballenpresse nach Anspruch 1,
dadurch gekennzeichnet, daß die Erntematerial-Schneideinrichtungen (47) eine Vielzahl von mit Querabstand angeordneten Messerelementen (72) umfassen, die sich in Radialrichtung in die Kammer erstrecken.

3. Rundballenpresse nach Anspruch 2,
dadurch gekennzeichnet, daß sie weiterhin Steuereinrichtungen (84 - 87) zum schrittweisen Zurückziehen der sich radial erstreckenden Messerelemente (72) aus der Kammer unter Bedingungen umfaßt, in denen das Erntematerial von der Fördereinrichtung (16) in die ausdehnbare Kammer gefördert wird, um einen zylindrischen Packen aus Erntematerial zu bilden.

4. Rundballenpresse nach einem der vorhergehenden Ansprüche,
dadurch gekennzeichnet, daß sich die Erntematerial-Schneideinrichtungen (47) in die ausdehnbare Kammer in der Nähe der oberen Begrenzung (30) der Zuführungsöffnung erstrecken.

5. Rundballenpresse nach einem der vorhergehenden Ansprüche, dadurch gekennzeichnet, daß die Erntematerial-Umgrenzungseinrichtungen weiterhin zumindest eine sich in Querrichtung erstreckende Walze (30) umfassen,
die sich zwischen den Seitenwänden (52, 53) hinter der zumindest einen beweglichen Umgrenzungseinrichtung (32) bei Betrachtung in der Drehrichtung des zylindrischen Packens erstreckt,
und eine angetriebene Welle (48) und eine Vielzahl von koaxialen Segmenten (55 - 63) umfaßt, die Seite an Seite entlang der Welle (48) für eine Drehung mit dieser befestigt sind.

6. Rundballenpresse nach Anspruch 5,
dadurch gekennzeichnet, daß die Schneideinrichtungen (47) Messerbefestigungseinrichtungen (85) zur Befestigung der mit Abstand voneinander angeordneten Messerelemente (72) zwischen den Segmenten (55 - 63) auf der Welle (48) für ein Verschwenken um die Welle (48) unabhängig von den rotierenden Segmenten (55 - 63) umfassen.

7. Rundballenpresse nach Anspruch 6, unter Rückbeziehung auf Anspruch 4,
dadurch gekennzeichnet, daß die zumindest eine sich in Querrichtung erstreckende Walze eine Startwalze (30) ist, die die obere Begrenzung der Zuführungsöffnung ergibt.

8. Rundballenpresse nach einem der vorhergehenden Ansprüche, dadurch gekennzeichnet, daß:
die Erntematerial-Umgrenzungseinrichtung Einrichtungen (18, 32, 20) zum Fördern des durch die Zuführungsöffnung eingeführten Erntematerials in die ausdehnbare Kammer auf einem kontinuierlich spiralförmigen Pfad unter Einfügung des Erntematerials in die sich ausdehnende zylindrische Packung aus Erntematerial einschließt, und
die Schneideinrichtungen (47) das Erntematerial nach seiner Einfügung in den zylindrischen Packen schneiden.

9. Rundballenpresse nach Anspruch 8,
dadurch gekennzeichnet, daß die Einrichtungen (30, 18) zur Bildung der Zuführungsöffnung einen Bodenförderer (18) umfassen, der sich zwischen den Seitenwänden (52, 53) erstreckt, um Erntematerial aufzunehmen, das von der Fördereinrichtung (16) in die Kammer gefördert wird,
wobei der Bodenförderer (18) die untere Begrenzung der Zuführungsöffnung ergibt und so angetrieben wird, daß er anfänglich das Erntematerial auf seine spiralförmige Bahn zwingt und auf dieser bewegt.

10. Rundballenpresse nach Anspruch 9,
dadurch gekennzeichnet, daß die Schneideinrichtungen (47) das Erntematerial am Umfang des zylindrischen Packens schneiden und daß das geschnittene Erntematerial spiralförmig in Eingriff mit dem Erntematerial gedrückt wird, das in die Kammer eingeführt wird, nachdem das Erntematerial mit der Schneideinrichtung (47) in Eingriff gekommen ist.

11. Rundballenpresse nach einem der vorhergehenden Ansprüche, dadurch gekennzeichnet,
daß die Fördereinrichtung (16) eine Aufnehmereinrichtung (16) zum Aufnehmen von Erntematerial von einem Feld und zum Fördern des Erntematerials zu der Zuführungsöffnung umfaßt.

12. Verfahren zur Formung eines in Segmente unterteilten zylindrischen Ballens aus Erntematerial mit einem allgemein runden Querschnitt in einer Rundballenpresse (10), wobei das Verfahren die folgenden Schritte umfaßt:
- Aufnehmen von Erntematerial,
- Zuführen des aufgenommenen Erntematerials durch eine Erntematerial-Zuführungsöffnung in eine Ballenformungskammer, die einen Außenumfang aufweist, der durch Erntematerial-Umgrenzungseinrichtungen 18, 32, 20, 30) definiert ist, die zumindest eine bewegliche Umgrenzungseinrichtung umfassen, die durch eine Umschlingungseinrichtung (32) und/oder eine Vielzahl von sich in Querrichtung erstreckenden Walzen (20) gebildet ist,
- Formen des Erntematerials zu einer Matte, während es in die Ballenformungskammer eintritt,
- Führen der Matte aus Erntematerial zu Anfang entlang des Außenumfangs,
- Führen der Matte nachfolgend entlang einer spiralförmigen Bahn zur Formung eines zylindrischen Packens, der einen allgemein runden Querschnitt aufweist, und
- Schneiden der Matte aus Erntematerial, während diese entlang des Außenumfangs der Ballenformungskammer geführt wird,
wobei das Verfahren dadurch gekennzeichnet ist,
daß der Schneidschritt ausgeführt wird, nachdem die Matte aus Erntematerial entlang der zumindest einen beweglichen Umgrenzungseinrichtung (32/20) geführt wurde und bevor sie die Erntematerial-Zuführungsöffnung erreicht.

13. Verfahren nach Anspruch 12,
dadurch gekennzeichnet, daß der Formungsschritt weiterhin:
- das Fördern des aufgenommenen Erntematerials in einer allgemein horizontalen Richtung umfaßt, während es zu einer Matte geformt wird und bevor es entlang des Außenumfangs der Ballenformungskammer geführt wird.

14. Verfahren nach Anspruch 13,
dadurch gekennzeichnet, daß der Schneidschritt unter Bedingungen durchgeführt wird, bei denen die Matte aus Erntematerial entlang der spiralförmigen Bahn in der allgemeinen Richtung von nachfolgend aufgenommenem Erntematerial geführt wird, das in der allgemein horizontalen Richtung gefördert wird.

15. Verfahren nach einem der Ansprüche 12 bis 14,
dadurch gekennzeichnet, daß das Schneiden an einer Vielzahl von mit horizontalem Abstand angeordneten Stellen erfolgt.

16. Verfahren nach Anspruch 15,
dadurch gekennzeichnet, daß das Schneiden in vertikalen Ebenen erfolgt, um die Matte kontinuierlich in einer Weise in Segmente zu unterteilen, die vertikale Scheiben in der zylindrischen Packung ergibt.

17. Verfahren nach einem der Ansprüche 12 bis 16
gekennzeichnet durch die weiteren Schritte des:
- Messens des Durchmessers des zylindrischen Packens,
- Beenden des Schneidschrittes, wenn der Durchmesser einen vorgegebenen Wert erreicht, und
- Einführens von Wickelmaterial in die Ballenkammer, um dieses um den zylindrischen Packen zu wickeln, um einen fertigen Ballen zu bilden.

18. Verfahren nach einem der Ansprüche 12 bis 17,
dadurch gekennzeichnet, daß der Schneidschritt das intermittierende Schneiden der Matte aus Erntematerial umfaßt.

## Revendications

1. Botteleuse ronde (10) comportant:
un châssis principal (11)
une paire de parois latérales espacées (52, 53), montées sur ledit châssis principal (11);
un moyen de confinement de matériau de récolte (18, 32, 20, 30), monté entre lesdites parois latérales et définissant une chambre extensible afin de former rotativement une botte cylindrique de matériau de récolte entre lesdites parois latérales (52, 53),
ledit moyen de confinement de matériau de récolte comprenant au moins un moyen de confinement mobile constitué par un tablier (32) et/ou par plusieurs rouleaux transversaux (20);
un moyen de convoyeur (16) monté sur ledit châssis (11) pour saisir le matériau de récolte et le transporter dans ladite chambre;
un moyen (30, 18) de définition d'une ouverture d'introduction généralement transversale de matériau de récolte, associé fonctionnellement avec ledit moyen de convoyeur (16) pour recueillir le matériau de récolte transporté dans ladite chambre; et
un moyen de sectionnement de matériau de récolte (47), s'étendant dans ladite chambre extensible entre ou à travers ledit moyen de confinement de matériau de récolte (18, 32, 20, 30) pour couper le matériau de récolte à la surface de ladite botte cylindrique pendant sa formation;
caractérisée en ce que:
lesdits moyens de sectionnement (47) de matériau de récolte s'étendent dans ladite chambre extensible à un endroit situé à l'arrière dudit au moins un moyen de confinement mobile (32) et à l'avant de ladite ouverture d'introduction, lorsque l'on regarde dans le sens de rotation de la botte cylindrique.

2. Botteleuse ronde selon la revendication 1, caractérisée en ce que ledit moyen de sectionnement de matériau de récolte (47) comprend plusieurs éléments de couteaux espacés transversalement (72) et s'étendant radialement dans ladite chambre.

3. Botteleuse ronde selon la revendication 2, caractérisée en ce qu'elle comprend en outre des moyens de contrôle (84-87) for rétracter graduellement lesdits éléments (72) de couteaux en extension hors de ladite chambre dans des situations où le matériau de récolte est convoyé dans ladite chambre extensible par ledit moyen de convoyeur (16) pour constituer une botte cylindrique de matériau de récolte.

4. Botteleuse ronde selon l'une quelconque des revendications précédentes, caractérisée en ce que ledit moyen de sectionnement de matériau de récolte (47) s'étend dans ladite chambre extensible à proximité de la limite supérieure (30) de ladite ouverture d'introduction.

5. Botteleuse ronde selon l'une quelconque des revendications précédentes, caractérisée en ce que ledit moyen de confinement de matériau de récolte comprend en outre au moins un rouleau transversal (30),
s'étendant entre les parois latérales (52, 53) à l'arrière dudit au moyen de confinement (32) tel que vu dans ledit sens de rotation de la botte cylindrique et
comprenant un arbre d'entraînement (48) et une pluralité de segments coaxiaux (55-63) montés côte à côte le long dudit axe (48) afin de pouvoir tourner avec ce dernier.

6. Botteleuse ronde selon la revendication 5, caractérisée en ce que lesdits moyens de sectionnement (47) comprennent des moyens de montage (85) de couteaux pour monter lesdits éléments (72) de couteaux espacés entre lesdits segments (55-63) sur ledit arbre (48) de manière à pivoter autour dudit arbre (48) indépendamment desdits segments (55-63) en rotation.

7. Botteleuse ronde selon la revendication 6, lorsqu'elle se rapporte à la revendication 4, caractérisée en ce que ledit au moins un rouleau transversal est un rouleau (30) de démarrage constituant la limite supérieure de ladite ouverture d'introduction.

8. Botteleuse ronde selon l'une quelconque des revendications précédentes, caractérisée en ce que:
ledit moyen de confinement de matériau de récolte comprend des moyens (18, 32, 20) de transport de matériau de récolte engagé par ladite ouverture d'introduction dans ladite chambre extensible suivant un trajet continu en spirale et incorporant ledit matériau de récolte dans ladite botte cylindrique de matériau de récolte en expansion; et
ledit moyen de sectionnement (47) coupe ledit matériau de récolte suite à son incorporation dans ladite botte cylindrique.

9. Botteleuse ronde selon la revendication 8,
caractérisée en ce que ledit moyen (30, 18) de définition de ladite ouverture d'introduction comprend un convoyeur (18) de base s'étendant entre lesdites parois latérales (52, 53) afin de recevoir le matériau de récolte transporté dans ladite chambre par ledit moyen de convoyeur (16),
ledit convoyeur (18) de base (18) constituant la limite inférieure de ladite ouverture d'introduction et étant entraîné pour contraindre initialement ledit matériau de récolte le long de son trajet en spirale.

10. Botteleuse ronde selon la revendication 9, caractérisée en ce que ledit moyen de sectionnement (47) coupe le matériau de récolte au pourtour de ladite botte cylindrique, et que le matériau de récolte découpé est contraint à s'engager avec le matériau de récolte introduit dans ladite chambre après l'engagement dudit moyen de sectionnement (47) avec le matériau de récolte.

11. Botteleuse ronde selon l'une quelconque des revendications précédentes, caractérisée en ce que ledit moyen de convoyeur (16) comprend une ramasseuse (16) pour ramasser du matériau de récolte hors d'un champ et le transporter dans ladite ouverture d'introduction.

12. Méthode pour former, dans une botteleuse ronde (10), une botte cylindrique segmentée de matériau de récolte, possédant une section transversale généralement circulaire, ladite méthode comprenant les étapes suivantes:
- le ramassage du matériau de récolte;
- l'introduction du matériau de récolte ramassé à travers une ouverture d'introduction de matériau de récolte dans une chambre de bottelage possédant un pourtour extérieur défini par un moyen de confinement de matériau de récolte (18, 32, 20, 30) comprenant au moins un moyen de confinement constitué par un tablier (32) et/ou par plusieurs rouleaux transversaux (20);
- la formation dudit matériau de récolte en un tapis, à son entrée dans ladite chambre de formation de botte;
- le guidage dudit tapis de matériau de récolte, initialement le long dudit pourtour extérieur;
- le guidage consécutif dudit tapis le long d'un trajet en spirale pour former une botte cylindrique possédant une section généralement circulaire, et
- le sectionnement dudit tapis de matériau de récolte, lors de son guidage le long dudit pourtour extérieur de ladite chambre de formation de botte;
ladite méthode étant caractérisée en ce que ladite étape de sectionnement est exécutée après le guidage dudit tapis de matériau de récolte le long dudit au moins un moyen de confinement mobile (32/20) et avant l'atteinte de ladite ouverture d'introduction de matériau de récolte.

13. Méthode selon la revendication 12, caractérisée en ce que ladite étape de formation comprend en outre:
- le transport dudit matériau ramassé suivant une direction généralement horizontale lors de sa formation en un tapis, et avant d'être guidé le long dudit pourtour extérieur de ladite chambre de formation de botte.

14. Méthode selon la revendication 13, caractérisée en ce que ladite étape de sectionnement a lieu dans des conditions où ledit tapis de matériau de récolte est guidé le long dudit trajet en spirale dans le sens général du matériau de récolte ramassé ensuite et transporté dans ladite direction généralement horizontale.

15. Méthode selon l'une quelconque des revendications 12 à 14, caractérisée en ce que ledit sectionnement a lieu à plusieurs endroits espacés horizontalement.

16. Méthode selon la revendication 15, caractérisée en ce que ledit sectionnement a lieu dans des plans verticaux afin de sectionner en continu ledit tapis de manière à constituer des tranches verticales dans ladite botte cylindrique.

17. Méthode selon l'une quelconque des revendications 12 à 16, caractérisée par les étapes suivantes:
- de détection du diamètre de ladite botte cylindrique;
- d'interruption de ladite étape de sectionnement lorsque ledit diamètre atteint une valeur prédéterminée; et
- d'introduction dudit matériau de ligature dans ladite chambre de formation de botte pour l'enrouler autour de ladite botte cylindrique afin de former une botte achevée.

18. Méthode selon l'une quelconque des revendications 12 à 17, caractérisée en ce que ladite étape de sectionnement comprend le sectionnement par intermittence dudit tapis de matériau de récolte.
